# FASCICULE DE BREVET EUROPEEN

(11) **EP 2 143 578 B1**
(45) Date de publication et mention de la délivrance du brevet: **02.09.2015**
(21) Numéro de dépôt: 09164786.7
(22) Date de dépôt: 07.07.2009
(51) Int. Cl.: B60J 7/00

(54) **Store à enrouleur équipé de moyens de blocage de la barre de tirage, et véhicule automobile correspondant**
Rollo mit Blockierungsvorrichtung der Zugstange, und entsprechendes Kraftfahrzeug
Roller blind equipped with means for blocking the pulling bar, and corresponding automobile

(30) Priorité: 12.09.2008 FR 0856166; 07.07.2008 FR 0854619
(43) Date de publication de la demande: 13.01.2010
(73) Titulaire: Advanced Comfort Systems France SAS - ACS France, 79300 Bressuire (FR)
(72) Inventeur: Sandrin, Xavier, 79300, BRESSUIRE (FR); Jincheleau, Michel, 79320, MONCOUTANT (FR); Cousson, François, 79430, LA CHAPELLE SAINT-LAURENT (FR); Chemineau, Nicolas, 85310, CHAILLE SOUS LES ORMEAUX (FR); Giret, Frédéric, 79300, BRESSUIRE (FR); Thibaudeau, Daniel, 79300, TERVES (FR)
(74) Mandataire: Vidon Brevets & Stratégie

(56) Documents cités:
- EP-A- 1 201 473
- DE-U1-202005 000 363
- FR-A- 2 775 730
- JP-A- 8 121 057

## Description

### 1. Domaine de l'invention

Le domaine de l'invention est celui des stores à enrouleur pour véhicule automobile. Plus précisément, l'invention concerne les stores à enrouleur équipés d'une barre de tirage guidée dans des rails de guidage latéraux, en particulier pour l'occultation de surfaces vitrées de grande largeur, par exemple pour les parebrises panoramiques et/ou les pavillons au moins partiellement vitrés.

De nombreux véhicules sont aujourd'hui équipés d'une telle surface vitrée. Il est alors nécessaire de prévoir des moyens d'occultation d'au moins une partie de cette surface vitrée, pour protéger du soleil les occupants du véhicule lorsque cela est nécessaire ou souhaitable. On prévoit ainsi généralement, dans ces véhicules, un module pare-soleil, comprenant au moins un tube enrouleur recevant une toile d'occultation (ou le cas échéant deux) qui peuvent être déployées en regard de la surface vitrée, sous l'action du déplacement d'une barre de tirage.

En général, notamment lorsque la surface à couvrir est importante et/ou que le déploiement est effectué dans un plan sensiblement horizontal, la barre de tirage est guidée dans des rails de guidage latéraux, parallèles ou non parallèles selon les cas.

Dans le cas où le store est destiné à occulter une partie supérieure d'un pare-brise panoramique, la barre de tirage peut porter des palettes pare-soleil, ou raquettes, qui sont articulées par rapport à cette barre de tirage.

Il est bien sûr souhaitable que la barre de tirage puisse être arrêtée en toute position intermédiaire, le long des rails de guidage, de façon à permettre aux utilisateurs de définir précisément la surface occultée et la surface non occultée (« arrêt toute position »), en fonction de leurs besoins ou de leur souhaits.

Lorsque le déploiement de la toile est motorisé, la barre de tirage est entraînée par un moteur, par exemple par l'intermédiaire de câbles. L'arrêt en toute position peut alors se faire en agissant sur le moteur.

En revanche, lorsque le store est à déploiement manuel, des moyens de blocage dédiés sont nécessaires. En effet, le tube enrouleur est équipé de moyens de rappel et, en l'absence de moyens de blocage, la toile se replie automatiquement, entraînant la barre de tirage, lorsque l'utilisateur lâche celle-ci.

Différentes solutions ont déjà été proposées pour permettre un tel arrêt toute position, souvent en prévoyant des moyens adaptés dans les rails de guidage et/ou sur les patins circulant dans ces rails, et reliés aux extrémités de la barre de tirage. Ces techniques peuvent, par exemple, agir en contrôlant l'existence d'un frottement suffisant entre le patin et le rail pour empêcher le repli de la toile.

Ces solutions présentent cependant divers inconvénients. Elles nécessitent, en particulier, des adaptations du rail et/ou des patins, qui vont à l'encontre de leur fonction principale. En effet, un effort de coulissement réduit est généralement souhaité, afin de faciliter une manoeuvre rapide et aisée pour les occupants du véhicule.

Un autre inconvénient est que la distance entre les rails, ou entraxe, peut varier de façon relativement importante d'un véhicule à l'autre, et varier également au cours du temps et/ou en fonction de la température. En conséquence, le réglage d'un frottement de blocage entre les patins et les rails est peu aisé, et doit être adapté pour chaque véhicule.

Par ailleurs, le blocage ainsi obtenu est généralement insuffisant pour respecter les exigences normatives en matière de sécurité, qui imposent que la barre de tirage ne doit pas se déplacer accidentellement, en présence d'une forte décélération correspondant, par exemple, à un freinage d'urgence. Ainsi, si l'on considère un freinage d'urgence de 1g, il faut que la masse embarquée (c'est-à-dire la masse des pièces mobiles, et donc la barre de tirage, et les équipements quelle porte, tels que les palettes pare-soleil) est inférieure aux efforts de coulissement. Cette condition est a priori impossible à respecter aujourd'hui notamment dans le cas d'une barre de tirage faisant toute la largeur intérieure du véhicule.

Ceci est d'autant plus vrai qu'une telle barre de tirage, manoeuvrée manuellement, doit être équipée d'un système d'équilibrage, augmentant encore le poids de la barre de tirage. Ce système d'équilibrage a pour fonction d'éviter les phénomènes d'arc-boutement, c'est-à-dire de déplacement plus rapide d'une des extrémités de la barre de tirage par rapport à l'autre, conduisant à un placement de cette barre de tirage non perpendiculaire à l'axe de déploiement de la toile, et donc à des blocages, et à des plis de la toile.

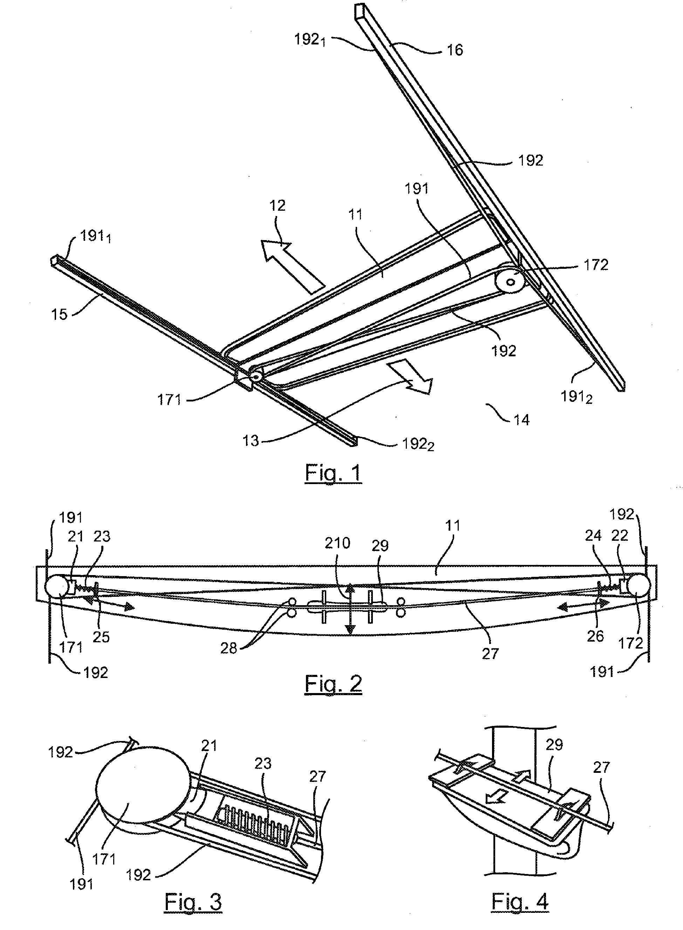

Un exemple de solution d'équilibrage efficace, développée par le Demandeur, est illustré par la figure 1.

Sur cette figure 1, on a représenté la barre de tirage 11, qui entraîne en déploiement (flèche 12) ou repli (flèche 13) une toile d'occultation 14 dont l'autre extrémité, non représentée, est reliée classiquement à un tube enrouleur, muni de moyens de rappel tendant à ramener la toile dans sa position repliée. La barre de tirage 11 est guidée le long de deux rails de guidage parallèles 15 et 16.

La barre de tirage 11 est, par ailleurs, équipée d'un système d'équilibrage comprenant deux poulies 171 et 172, qui coopèrent avec deux câbles d'équilibrage 191, 192 se croisant au milieu de la barre de tirage 11.

Le premier câble 191 présente une première portion s'étendant le long du rail 15, depuis une première extrémité 151 de celui-ci jusqu'à la poulie 171. Celle-ci renvoie une deuxième portion du câble 191 jusqu'à la seconde poulie 172. Une troisième portion du câble 191 s'étend depuis cette seconde poulie 171 jusqu'à une seconde extrémité 162 du rail 16, parallèlement à celui-ci.

Symétriquement, un second câble 192 s'étend depuis la première extrémité 161 du rail 16 jusqu'à la poulie 172, puis transversalement jusqu'à la poulie 171, et enfin parallèlement au rail 15, jusqu'à la seconde extrémité 152 de ce dernier.

Les deux câbles 191 et 192 partagent les poulies 171 et 172, définissant ainsi un système d'équilibrage. Cette approche permet de garantir que la barre de tirage 11 se déplace toujours perpendiculairement à l'axe de déploiement de la toile 14, c'est-à-dire perpendiculairement aux rails 15 et 16, dans le cas particulier où ceux-ci sont parallèles.

L'invention concerne plus particulièrement les stores à enrouleur mettant en oeuvre un tel système d'équilibrage à câbles.

Un tel système est déjà décrit dans le document FR 2 775 730.

Plus précisément, un objectif de l'invention est de fournir un store à enrouleurs pour véhicule automobile qui présente des moyens de blocage, ou moyens d'arrêt, en toute position, qui soit simple et efficace.

La demande interférente EP 1 987 973 A1 décrit des moyens de blocage.

Plus précisément, l'objectif de l'invention est de fournir une telle technique, qui soit suffisamment efficace pour assurer un blocage de la barre de tirage y compris en cas de forte décélération, sans nuire à la qualité du coulissement lorsque la barre de tirage est manipulée par un utilisateur.

Un autre objectif de l'invention est de fournir un tel store à enrouleur, qui évite les phénomènes d'arc-boutement de la barre de tirage, que ce soit en cas de mauvaise manoeuvre d'un utilisateur ou en présence d'une forte décélération.

Encore un autre objectif de l'invention est de fournir une telle technique qui soit simple et relativement peu coûteuse à mettre en oeuvre.

L'invention a encore pour objectif de fournir un tel store, dont la manipulation par un utilisateur est simple et intuitive.

Un autre objectif de l'invention est de fournir une telle technique, qui ne présente pas de nécessité de réglage, ni de problème de dimensionnement. Notamment, l'invention a pour objectif de fournir un tel store, qui ne soit pas dépendant des différences d'entraxe entre les rails.

Ces objectifs, ainsi que d'autres qui apparaîtront plus clairement par la suite, sont atteints selon l'invention à l'aide d'un store à enrouleur comprenant au moins une toile d'occultation entraînée par une barre de tirage guidée dans deux rails de guidage, et équipée de moyens d'équilibrage comprenant au moins un câble d'équilibrage circulant dans ou sur la ladite barre de tirage, et guidé par au moins deux poulies portées par ladite barre de tirage.

Selon l'invention, la barre de tirage comprend des moyens de blocage de ladite barre de tirage agissant sur au moins un desdits câbles d'équilibrage, au moins un desdits câbles d'équilibrage portant, sur une portion de sa longueur, au moins un premier élément de frottement pour améliorer l'action de blocage.

Ainsi, il est aisé de contrôler le blocage de la barre de tirage, permettant un arrêt toute position. Le mécanisme de blocage est intégralement porté par la barre de tirage, et il n'y a donc aucun problème de réglage au niveau des rails.

L'élément de frottement permet d'améliorer le blocage d'un ou des deux câbles d'équilibrage dans la barre de tirage.

Avantageusement, dans ce cas, on peut prévoir un second élément de frottement fixe par rapport à la barre de tirage, monté de façon qu'un desdits câbles d'équilibrage soit pris en sandwich entre ledit premier et ledit second éléments de frottement, dans une position de blocage.

De façon préférentielle, ledit ou lesdits éléments de frottement sont des pièces réalisées en un matériau à coefficient de frottement élevé, surmoulé ou fixé sur ledit câble ou sur ladite barre de tirage.

Avantageusement, lesdits moyens d'équilibrage comprennent deux câbles d'équilibrage se croisant dans ladite barre de tirage.

Ce système permet de garantir, efficacement, le maintien de la barre de tirage parallèle à l'axe souhaité, sans décalage.

Le ou lesdits éléments de blocage peuvent comprendre un élément formant piston s'étendant selon un axe sensiblement perpendiculaire à un plan défini par ladite barre de tirage, et pouvant prendre deux positions :
une position de verrouillage, dans laquelle ledit élément formant piston assure une pression de blocage contre au moins un desdits câbles d'équilibrage et/ou un desdits éléments de frottement ;
   - une position de déverrouillage, dans laquelle ledit élément formant piston n'assure pas de pression de blocage contre le ou lesdits câbles d'équilibrage ou le ou lesdits éléments de frottement On dispose ainsi d'un mécanisme simple et efficace.

Ledit élément formant piston peut alors coopérer, par exemple, avec une poignée de déverrouillage, montée basculante sur son extrémité.

Une telle poignée peut avantageusement prendre deux positions de déverrouillage, selon les besoins de l'utilisateur, et notamment selon que celui-ci veut déployer ou replier la toile d'occultation. La position de verrouillage peut alors être une position stable, entre les deux positions de déverrouillage.

Des moyens de rappel sont avantageusement prévus, pour ramener la poignée dans la position de verrouillage et/ou pour ramener les éléments de frottement dans la position de blocage du câble.

Selon un mode de réalisation avantageux, ladite barre de tirage porte également des moyens de déverrouillage desdits moyens de blocage.

Ces moyens de déverrouillage peuvent notamment être conçus pour être actionnés par une poignée permettant simultanément le déverrouillage et le déplacement de la barre de tirage, dans les deux sens.

En complément, ou selon une variante de mise en oeuvre, lesdits moyens de blocage peuvent comprendre deux éléments de blocage pouvant prendre deux positions :
- une position de blocage, dans laquelle chacun desdits éléments de blocage est en contact avec l'une desdites poulies, de façon à empêcher leur rotation ;
- une position de libération, dans laquelle lesdits de blocage sont éloignées desdites poulies, de façon à permettre leur rotation.

Ainsi, on contrôle simplement et efficacement l'immobilisation de la barre de tirage, en agissant au moins une des poulies : il suffit en effet de bloquer ces poulies (ou au moins une d'entre elles) pour immobiliser la barre de tirage.

Selon un premier mode de réalisation, le store comprend un câble d'actionnement unique, et une poignée mobile perpendiculairement à l'axe de ladite barre de tirage et parallèlement au plan défini par ladite toile d'occultation en position déployée, actionnant un déplacement dudit câble d'actionnement.

Selon un deuxième mode de réalisation, lesdits moyens de déverrouillage comprennent une poignée souple reliée à au moins un câble d'actionnement, et mobile perpendiculairement à l'axe de ladite barre de tirage et au plan défini par ladite toile d'occultation, en position déployée.

Selon un troisième mode de réalisation, lesdits moyens de déverrouillage comprennent au moins un élément mobile en rotation selon un axe perpendiculaire à l'axe de ladite barre de tirage et au plan défini par ladite toile d'occultation, en position déployée.

Selon un quatrième mode de réalisation, lesdits moyens de déverrouillage comprennent deux éléments de poignée mobiles l'un vers l'autre parallèlement à l'axe de ladite barre de tirage, et solidarisée chacun à un câble d'actionnement relié à l'un desdits éléments de blocage.

Selon un cinquième mode de réalisation, lesdits moyens de déverrouillage comprennent deux éléments de poignée mobiles l'un vers l'autre perpendiculairement à l'axe de ladite barre de tirage, et solidarisée chacun à un câble d'actionnement relié à l'un desdits éléments de blocage.

D'autres modes de réalisation sont bien sûr possibles, à l'aide de tous moyens adéquats pour agir sur l'une ou plusieurs poulies.

Lesdits éléments de blocage peuvent coopérer avec des moyens de rappel, tendant à les ramener dans ladite position de blocage, pour simplifier les manipulations : par défaut, en absence de toute action, la barre de tirage est immobilisée.

Selon un mode de mise en oeuvre particulier, le store comprend au moins un câble d'actionnement relié à au moins un desdits moyens de blocage, et en ce que lesdits moyens de déverrouillage agissent sur le ou lesdits câbles.

Avantageusement, ladite barre de tirage est, ou présente une structure, en métal, de façon que celle-ci soit insensible aux variations de température notamment.

Ladite barre de tirage peut par ailleurs porter un enjoliveur supérieur et/ou un enjoliveur inférieur en matière plastique.

L'invention concerne également les véhicules automobiles comprenant au moins un store à enrouleur tel que décrit ci-dessus.

D'autres caractéristiques et avantages de l'invention apparaîtront plus clairement à la lecture de description suivante de quelques modes de réalisation préférentiels, donnés à titre de simples exemples illustratifs et non limitatifs, et des figures annexées parmi lesquelles :
- la figure 1, déjà commentée en préambule, illustre un exemple de barre de tirage équipée d'un système d'équilibrage à câble ;
- la figure 2 présente schématiquement un premier mode de réalisation d'une barre de tirage équipée de moyens de blocage selon l'invention ;
- la figure 3 présente plus précisément le mécanisme de blocage d'une poulie de la barre de tirage de la figure 2 ;
- la figure 4 présente un exemple de réalisation du mécanisme de déverrouillage du moyen de blocage de la barre de tirage de la figure 2 ;
- la figure 5 illustre un exemple de poignée de déverrouillage pour la barre de tirage de la figure 2 ;
- la figure 6 illustre un deuxième mode de réalisation d'un mécanisme de déverrouillage de moyens de blocage agissant sur les poulies ;
- la figure 7 présente un troisième mode de réalisation de moyens de déverrouillage ;
- la figure 8 présente un quatrième mode de réalisation des moyens de déverrouillage ;
- la figure 9 illustre un exemple de poignée, pour le mécanisme de la figure 8;
- la figure 10 illustre un autre mode de mise en oeuvre, dans lequel les moyens de blocage agissent sur les câbles d' équilibrage ;
- la figure 11 illustre plus précisément un exemple de moyens de blocage, pour le mode de mise en oeuvre de la figure 10 ;
- les figures 12A et 12B illustrent un autre mode de réalisation de moyens de blocage agissant sur les câbles d'équilibrage, par rotation ;
- les figures 13A et 13B présentent une approche améliorant le blocage, selon l'invention, lorsque celui-ci agit sur les câbles ;
- les figures 14A et 14B illustrent un mode de réalisation des moyens de blocage adaptés à l'approche des figures 13A et 13B.

L'invention s'applique donc à un store à enrouleur du type illustré par la figure 1, comprenant un système d'équilibrage à câble(s).

La barre de tirage 11 peut par exemple comprendre une structure métallique (par exemple en acier) emboutie, recouvert par un enjoliveur inférieur et/ou un enjoliveur supérieur, par exemple en matière plastique.

Cette barre de tirage 11 est adaptée pour coulisser par ses extrémités (munies de patins ou autres moyens de guidage adaptés, le cas échéant), selon une technique classique en soi, dans les deux rails de guidage 15 et 16, qui sont solidaires du véhicule.

La barre de tirage comporte donc un système d'équilibrage à câbles, formé par les poulies 171 et 172 et les câbles d'équilibrage 191, 192, selon le principe décrit précédemment, et également illustré par la figure 2.

Les poulies 171 et 172 reçoivent chacune, de façon croisée, les câbles d'équilibrage 191 et 192. Ainsi, Elles se déplacent l'une et l'autre de la même distance, du fait de ces câbles croisés.

Comme cela apparaît plus clairement sur la figure 3, la poulie 171 présente un réa adapté pour recevoir, les deux câbles. Selon un autre mode de réalisation, la poulie 171 peut présenter deux réas associés chacun à l'un des câbles 191, 192.

Selon une première approche, qui peut être combinée avec la solution de l'invention décrite ci-après, on prévoit des moyens de blocage de la rotation des poulies 171 et 172, sous la forme d'un patin de blocage 21, 22 ou d'un élément similaire, venant en contact avec au moins une des poulies 171, 172 de façon à empêcher sa rotation.

Des moyens de rappel 23, 24 placés entre les patins de blocage 21, 22 et des butées 25, 26 formées sur la barre de tirage définissent un piston de chaque côté, tendant à ramener les patins de blocage 21, 22 en contact avec les poulies 171 et 172 de façon à les immobiliser. Ainsi, par défaut, c'est-à-dire en l'absence de toute action d'un utilisateur, les patins de blocage sont en contact avec les poulies, empêchant leur rotation et donc leur déplacement le long des câbles 191, 192. La barre de tirage est donc immobilisée, dans la position souhaitée.

Selon le premier mode de réalisation illustré par la figure 2, un câble de déverrouillage 27 relie les deux patins de blocage 21 et 22, et est guidé par des plots 28 solidaires de la barre de tirage. Le câble 27 traverse également un chariot 29, mobile transversalement par rapport à l'axe de la barre de tirage (flèche 210), et donc parallèlement à l'axe de déplacement de la toile.

Cette navette, plus précisément illustrée par la figure 4 peut présenter deux coulisseaux 41, 42 aptes à se déplacer dans des rails correspondants (non représentés), prévus à cet effet sur la barre de tirage.

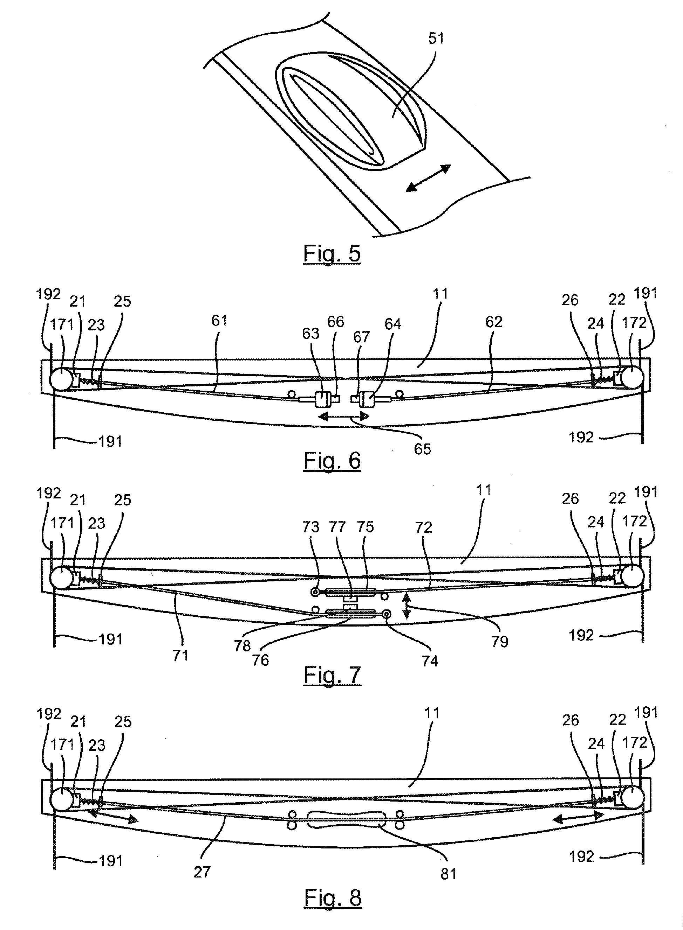

La barre de tirage porte, par ailleurs, comme illustrée par la figure 5, une poignée 51, agissant sur la navette 29, dans la direction définie par la flèche 210.

Ainsi, un utilisateur agissant sur la poignée 51 déplace la navette 29, selon la direction 210, indifféremment dans un sens ou dans l'autre. Ce déplacement entraîne un déplacement du câble 27 et donc un éloignement des patins 21 et 22, qui ne sont alors plus en contact avec les poulies 171, 172.

Dans cette situation, il est alors possible de déplacer la barre de tirage le long des rails de guidage, puisque les poulies 171, 172 peuvent rouler le long des câbles 191, 192. Ce coulissement dans les rails se fait de façon simple et sans contrainte, puisque les moyens de blocage n'agissent pas sur les patins de coulissement, ni sur les rails.

Dès que l'utilisateur relâche la poignée 51, la navette 29 reprend sa position de repos (illustrée par la figure 2) sous l'action des ressorts 23 et 24. Ceci entraîne également le retour des patins de blocage 21 et 22 dans leur position de blocage. En d'autres termes, dès que la poignée 51 est relâchée, la rotation des poulies est empêchée, et la barre de tirage est immobilisée.

Ce mode de réalisation présente l'avantage d'une manoeuvre simple et instinctive de la barre de tirage. Par ailleurs, l'effort de coulissement est faible, dès que le déverrouillage est effectué par l'intermédiaire de la poignée.

En revanche, le blocage par l'intermédiaire des poulies est très efficace, et permet de respecter les contraintes de blocage, notamment dans le cas d'un freinage d'urgence.

En outre, cette solution présente l'avantage que la pièce de structure de la barre de tirage, par exemple en acier embouti, est stable en dimensionnement, quelle que soit la température. Le système de l'invention est ainsi fonctionnel, indépendamment de la température.

Ce système est également indépendant d'une différence d'entraxe entre les rails, contrairement aux techniques de l'art antérieur, qui prévoit des systèmes de blocage agissant sur les patins de coulissement et/ou les rails.

La figure 6 illustre une autre mise en oeuvre.

Dans ce mode de réalisation, le mécanisme d'équilibrage et les moyens de blocage 21, 22 des poulies sont identiques, et mis en oeuvre de la même façon que ceux décrit sur la figure 2. Ils portent les mêmes références numériques et ne sont donc pas décrits à nouveau.

Le mécanisme d'actionnement du déverrouillage, ou de libération, des poulies est en revanche différent. On a, en effet, prévu deux câbles 61, 62 reliés chacun à l'un des patins de blocage 21, 22. L'extrémité de chacun de ces câbles 61, 62 est reliée, en partie centrale de la barre de tirage, à deux éléments de préhension, ou éléments de poignée, 63, 64 formant une poignée actionnable par pincement : les éléments de poignée 63, 64 comprend chacun une extension, que l'utilisateur peut saisir simultanément entre le pouce et l'index, pour les ramener l'une vers l'autre, pour assurer le déverrouillage. Ainsi, les éléments de poignée 63 et 64 sont mobiles parallèlement à l'axe principal de la barre de tirage, selon la flèche 65. Ils sont, par exemple, guidés par des rails 66, 67 prévus à cet effet sur la barre de tirage.

Lorsque l'utilisateur pince les deux éléments de poignée, pour les rapprocher l'une de l'autre, les patins de blocage 21 et 22 sont éloignés des poulies 271 et 272 qui peuvent alors rouler le long des câbles 191, 192. Il est donc alors possible de déplacer la barre de tirage, pour assurer le déploiement ou le repli de la toile d'occultation.

Dès que l'utilisateur relâche les éléments de poignée 63, 64 ceux-ci reprennent leur position de repos, sous l'action des ressorts 22 et 23. Dans le même temps, les patins de blocage 21, 22 reviennent en contact des poulies 171, 172 et la barre de tirage est à nouveau immobilisée.

Cette approche présente les mêmes avantages que ceux décrits dans la première approche.

La figure 7 illustre une troisième approche, relativement proche de celle illustrée par la figure 6. À nouveau, le mécanisme d'équilibrage et les moyens de déblocage sont similaires et non discutés à nouveau. Cette approche se distingue de celle de la figure 6 par le fait que les deux éléments de poignée 75, 76 sont mobiles perpendiculairement à l'axe de la barre de tirage, et parallèlement à l'axe de déroulement de la toile.

Les câbles 71, 72, reliés respectivement aux éléments de blocage 21, 22, sont maintenus par des plots 73, 74 solidaires de la barre de tirage. Ils traversent les éléments de poignée 75 et 76, qui sont guidés par les rails de guidage 77, 78.

Lorsque l'utilisateur pince les éléments de poignée 75, 76 pour les rapprocher l'un de l'autre (flèche 79), les câbles 71, 72 sont déplacés, et les patins de blocage 21, 22 éloignés des poulies 171, 172 (entraînant, de même que dans les modes de réalisation précédents, la tension des ressorts 23 et 24).

Lorsque les éléments de poignée sont relâchés, ils reprennent leur position de repos sous l'action des ressorts 23 et 24 et les éléments de blocage reviennent en contact avec les poulies, qui sont à nouveau immobilisées.

La figure 8 présente une quatrième approche, reprenant une partie des éléments déjà décrits en relation avec la figure 2. Les éléments communs portent les mêmes numéros et ne sont pas commentés à nouveau.

Cette approche diffère de celui de la figure 2 par le fait que la navette 81, traversée par le câble 27, n'est pas mobile dans un plan parallèle à celui défini par la toile déployée, mais au contraire perpendiculairement à ce plan. Le fonctionnement reste en revanche le même, pour les moyens de blocage : lorsque la navette est déplacée, les patins de blocage 21 et 22 sont éloignés des poulies 171 et 172, par l'intermédiaire du câble 27, ce qui permet le déplacement de la barre de tirage.

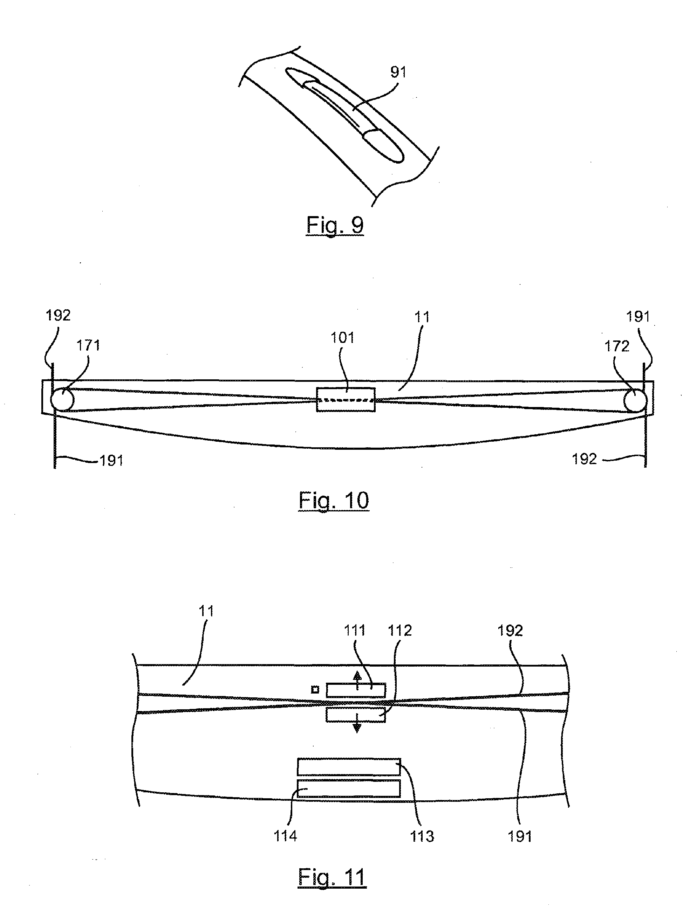

Ce déplacement peut par exemple être assuré par une poignée souple 91, du type poignée de valise, comme illustré par la figure 9.

Dès que l'utilisateur saisit cette poignée 91, les poulies sont déverrouillés et la barre de tirage peut être déplacée dans l'un ou l'autre des sens de déplacement. Dès que l'on relâche la poignée, les poulies sont à nouveau bloquées et la barre de tirage est immobilisée.

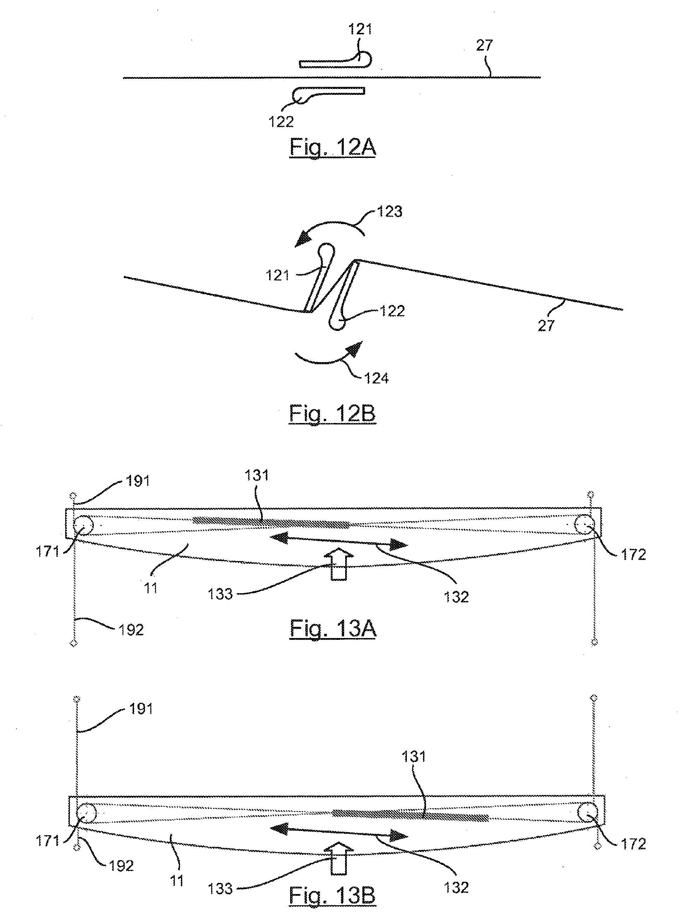

Une autre technique de commande pour actionner les moyens de blocage par l'intermédiaire du câble d'actionnement 27 est illustré par les figures 12A et 12B. Le câble 27 circule à l'intérieur d'un canal 125 défini dans une pièce mobile en rotation comprenant deux portions 121, 122, actionnée par une poignée (non représentée). Lorsqu'on applique une rotation à cette poignée, le canal 125 subit le même décalage en rotation (flèches 123, 124), qui passe de la position de repos (figure 12A) à la position de libération (figure 12B). Dans cette position de libération, le câble 27 est déplacé, de façon qu'il tire sur les moyens de blocage des poulies, pour permettre leur rotation, et donc le déplacement de la barre de tirage.

Des moyens de rappel (non représentés) ramènent la poignée et la pièce mobile en rotation 121, 122 dans la position de repos de la figure 12A, lorsque la poignée est relâchée.

D'autres mises en oeuvre sont bien sûr envisageables. Par exemple, le blocage des poulies peut être assuré par une mâchoire, ou un mécanisme de freinage similaire à celui des freins à disque de bicyclette. Il est également possible de n'agir que sur une seule des poulies, l'autre poulie étant immobilisée par l'intermédiaire du câble d'équilibrage.

La figure 10 illustre un autre mode de mise en oeuvre, qui diffère des précédentes approches par le fait que les moyens de blocage n'agissent plus directement sur les poulies, mais sur un des, ou sur les deux, câbles d'équilibrage.

Selon cette approche, on prévoit des moyens 101, aptes à immobiliser l'un des câbles d'équilibrage. Dans ce cas, les poulies 171 et 172 ne peuvent plus tournées, ce qui entraîne l'immobilisation de la barre de tirage.

Dès que les moyens de verrouillage 101 libèrent les câbles 191, 192, les poulies 171, 172 peuvent à nouveau se déplacer le long des câbles 191, 192 permettant le déplacement de la barre de tirage.

Les moyens 101 peuvent être une mâchoire, comme illustrée en figure 11. Cette mâchoire comprend deux patins de blocage 111, 112, par exemple en matière plastique, qui viennent bloquer le câble 18, par exemple en position centrale, par exemple à l'emplacement où les câbles 191, 192 se croisent.

Une poignée, constituée par exemple de deux éléments 113 et 114, permet d'éloigner les mâchoires l'une de l'autre, et donc de libérer les câbles 191, 192.

On constate ici, que de même que dans les mises en oeuvre précédentes, il est possible, d'une seule main et dans le même mouvement, d'actionner la libération des poulies et/ou des câbles, et de déplacer la barre de tirage aussi bien dans le sens du déploiement que dans le sens du repli. Il suffit de relâcher la poignée pour que la barre de tirage soit immobilisée, sans action positive de verrouillage. On dispose ainsi d'une commande simple, ergonomique et intuitive.

Selon l'invention, pour améliorer l'action de blocage, ou de freinage, sur l'un des câbles, on équipe celui-ci d'un élément de frottement rapporté, comme illustré schématiquement sur les figures 13A et 13B.

On solidarise à la portion du câble d'équilibrage 192 circulant dans la barre de tirage un élément de frottement 131 à fort coefficient de frottement, définissant une surface de freinage apte à coopérer avec des moyens de blocage, ou de freinage, dont un exemple est illustré par la suite. Cet élément de frottement 131 est rapporté sur le câble par surmoulage, ou à l'aide de tout moyen de fixation adapté.

Les figures 13A et 13B illustrent les deux positions extrêmes de la barre de tirage, dans un mode de réalisation adapté à l'occultation d'une partie supérieure de pare-brise. On constate que la surface de freinage 131 se déplace, comme représenté par la flèche 132. La position et la longueur de l'élément 131 sont donc choisies de façon à être toujours en contact avec les moyens de blocage, placés au milieu de la barre de tirage (flèche 133).

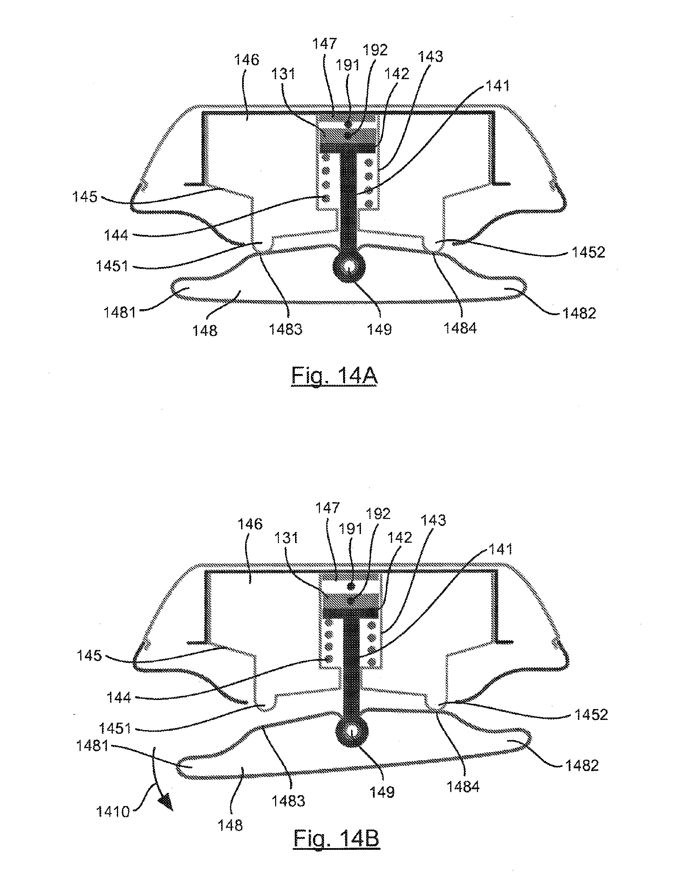

Les figures 14A et 14B présentent schématiquement, en coupe, des moyens de blocage adaptés au mode de réalisation des figures 13A et 13B.

Les moyens de blocage prennent la forme générale d'un piston, comprenant un arbre 141 dont une première extrémité porte une surface d'appui 142, venant en contact avec la surface de freinage 131 décrite ci-dessus. L'arbre 141 et la surface d'appui 142 sont mobiles dans un logement 143, selon un axe en Z (sensiblement vertical, le plan XY étant approximativement défini par la barre de tirage). Un ressort de rappel 144 tend à ramener la surface de freinage dans la position de blocage (figure 14A).

Un logement interne est défini pour cet ensemble de blocage, par la pièce 145, qui comprend le logement 143, et le couvercle 146 qui vient fermer ce logement interne. Le couvercle 146 porte un deuxième élément de frottement, ou deuxième surface de freinage, 147, qui est fixe.

La deuxième extrémité de l'arbre 141 est reliée à une poignée d'actionnement 148, montée basculante par rapport à l'axe 149 définie par cette deuxième extrémité.

La poignée 148 présente deux zones de préhension 1481 et 1482, permettant d'agir sur la poignée indifféremment par l'un ou l'autre des côtés, et deux surfaces de contact 1483 et 1484, aptes à coopérer respectivement avec deux ergots 1451 et 1452 prévus sur le logement interne 145 de façon à former des points d'appui.

Ainsi, lorsque la poignée 148 n'est pas actionnée, elle se trouve dans la position stable de la figure 14A, et la surface d'appui 142, sous l'action du ressort 144, se déplace vers la deuxième surface de freinage 147. La deuxième portion de câble d'équilibrage 191, qui ne porte pas d'élément de frottement, se trouve enserrée, ou prise en sandwich, entre les deux surfaces de freinage 131 et 147, et est en conséquence immobilisée. La barre de tirage est alors bloquée dans la position choisie par l'utilisateur. La force de rappel du ressort 144 et les caractéristiques des éléments de frottement 131 et 147 sont choisies de façon que le blocage de la barre de tirage soit suffisant, en fonction des besoins.

Le blocage peut également être assuré, au moins en partie, par le frottement entre la surface d'appui 142 et l'élément de frottement 131.

Lorsqu'un utilisateur agit sur la poignée 148 (figure 14B), pour déplacer la barre de tirage, il opère un basculement selon la flèche 1410 (comme déjà précisé, le montage de la poignée est symétrique, ce qui permet à l'utilisateur d'agir sur celle-ci aussi bien en arrière, comme illustré par la figure 14B, qu'en avant).

La surface de contact 1484 vient en appui contre l'ergot 1452, entraînant le déplacement de l'axe 149, et par conséquence de l'arbre 141 et de la surface d'appui 142. La portion de câble 191 n'est plus immobilisée entre les deux éléments de frottement, et peut donc se déplacer librement. De même, la portion de câble 192 portant l'élément de freinage 131, se déplace librement.

L'utilisateur peut donc, en maintenant la poignée 148 dans la position déverrouillée de la figure 14B (ou sa position symétrique) déplacer la barre de tirage. Dès qu'il lâche la poignée 148, celle-ci revient dans la position verrouillée de la figure 14A, sous l'action du ressort 144, qui assure dans le même dans le blocage de la portion de câble 191, comme expliqué plus haut.

## Revendications

1. Store à enrouleur comprenant au moins une toile d'occultation entraînée par une barre de tirage (11) guidée dans deux rails de guidage (15, 16), et équipée de moyens d'équilibrage comprenant au moins un câble d'équilibrage (191, 192) circulant dans ou sur la ladite barre de tirage (11), et guidé par au moins deux poulies (171, 172) portées par ladite barre de tirage (11),
**caractérisé en ce que** ladite barre de tirage comprend des moyens de blocage (147) de ladite barre de tirage (11), agissant sur au moins desdits câbles d'équilibrage (191, 192), et **en ce qu'**au moins un desdits câbles d'équilibrage (192) porte, sur une portion de sa longueur, au moins un premier élément de frottement (131) pour améliorer l'action de blocage.

2. Store à enrouleur selon la revendication 1, **caractérisé en ce que** ladite barre de tirage (11) porte des moyens de déverrouillage (27 ; 51 ; 75, 76 ; 81 ; 91 ; 113, 114 ; 121,122 ; 148) desdits moyens de blocage.

3. Store à enrouleur selon l'une quelconque des revendications 1 et 2, **caractérisé en ce qu'**il comprend un câble d'actionnement unique (27), et une poignée (29) mobile perpendiculairement à l'axe de ladite barre de tirage (11) et parallèlement au plan défini par ladite toile d'occultation en position déployée, actionnant un déplacement dudit câble d'actionnement (27).

4. Store à enrouleur selon l'une quelconque des revendications des revendications 1 à 3, **caractérisé en ce que** lesdits moyens d'équilibrage comprennent deux câbles d'équilibrage (191, 192) se croisant dans ladite barre de tirage (11).

5. Store à enrouleur selon l'une quelconque des revendications 1 à 4, **caractérisé en ce qu'**il comprend un second élément de frottement (147) fixe par rapport à la barre de tirage (11), monté de façon qu'un desdits câbles d'équilibrage (191) soit pris en sandwich entre ledit premier et ledit second éléments de frottement (131,147), dans une position de blocage.

6. Store à enrouleur selon l'une quelconque des revendications 1 à 5, **caractérisé en ce que** ledit ou lesdits éléments de frottement (131, 147) sont des pièces réalisées en un matériau à coefficient de frottement élevé, surmoulé ou fixé sur ledit câble (192) ou sur ladite barre de tirage (11).

7. Store à enrouleur selon l'une quelconque des revendications 1 à 6, **caractérisé en ce que** lesdits moyens de blocage comprennent un élément formant piston (141, 142) s'étendant selon un axe sensiblement perpendiculaire à un plan défini par ladite barre de tirage (11), et pouvant prendre deux positions :
- une position de verrouillage, dans laquelle ledit élément formant piston (141, 142) assure une pression de blocage contre au moins un desdits câbles d'équilibrage et/ou un desdits éléments de frottement (131) ;
- une position de déverrouillage, dans laquelle ledit élément formant piston (141, 142) n'assure pas de pression de blocage contre le ou lesdits câbles d'équilibrage ou le ou lesdits éléments de frottement (131).

8. Store à enrouleur selon la revendication 7, **caractérisé en ce que** ledit élément formant piston (141, 142) coopère avec une poignée de déverrouillage (148), montée basculante sur son extrémité (149).

9. Store à enrouleur selon l'une quelconque des revendications 1 à 8, **caractérisé en ce que** ladite barre de tirage (11) est, ou présente une structure, en métal.

10. Store à enrouleur selon l'une quelconque des revendications 1 à 9, **caractérisé en ce que** ladite barre de tirage (11) porte un enjoliveur supérieur et/ou un enjoliveur inférieur en matière plastique.

11. Véhicule automobile comprenant au moins un store à enrouleur selon l'une quelconque des revendications 1 à 10.

## Patentansprüche

1. Rollvorhang mit Aufwickler, umfassend mindestens einen Verdunkelungsvorhang, der von einer Zugstange (11) angetrieben wird, die in zwei Führungsschienen (15, 16) geführt wird und mit Ausgleichsmitteln versehen ist, welche mindestens ein Ausgleichsseil (191, 192) aufweisen, das in oder auf der Zugstange (11) umläuft und von mindestens zwei Rollen (171, 172) geführt wird, die von der Zugstange (11) getragen werden,
**dadurch gekennzeichnet, dass** die Zugstange Mittel (147) zur Feststellung der Zugstange (11) umfasst, die auf mindestens eines der Ausgleichsseile (191, 192) einwirken, und dass mindestens eines der Ausgleichsseile (192) auf einem Abschnitt seiner Länge mindestens ein erstes Reibelement (131) trägt, um die Wirkung der Feststellung zu verbessern.

2. Rollvorhang mit Aufwickler nach Anspruch 1, **dadurch gekennzeichnet, dass** die Zugstange (11) Mittel (27; 51; 75, 76; 81; 91; 113, 114; 121, 122; 148) zur Entriegelung der Feststellmittel trägt.

3. Rollvorhang mit Aufwickler nach einem der Ansprüche 1 und 2, **dadurch gekennzeichnet, dass** er ein einziges Betätigungsseil (27) und einen Griff (29) umfasst, der senkrecht auf die Achse der Zugstange (11) und parallel zu der von dem Verdunkelungsvorhang in der ausgefahrenen Position definierten Ebene beweglich ist und eine Verschiebung des Betätigungsseils (27) ermöglicht.

4. Rollvorhang mit Aufwickler nach einem der Ansprüche 1 bis 3, **dadurch gekennzeichnet, dass** die Ausgleichsmittel zwei Ausgleichsseile (191, 192) umfassen, die sich in der Zugstange (11) kreuzen.

5. Rollvorhang mit Aufwickler nach einem der Ansprüche 1 bis 4, **dadurch gekennzeichnet, dass** er ein zweites Reibelement (147) umfasst, das in Bezug zu der Zugstange (11) fest und derart montiert ist, dass eines der Ausgleichsseile (191) von dem ersten und dem zweiten Reibelement (131, 147) in einer Feststellposition sandwichartig eingespannt wird.

6. Rollvorhang mit Aufwickler nach einem der Ansprüche 1 bis 5, **dadurch gekennzeichnet, dass** das oder die Reibelemente (131, 147) Teile sind, die aus einem Material mit hohem Reibbeiwert, mit dem das Seil (192) oder die Zugstange (11) überzogen ist oder das daran befestigt ist, hergestellt sind.

7. Rollvorhang mit Aufwickler nach einem der Ansprüche 1 bis 6, **dadurch gekennzeichnet, dass** die Feststellmittel ein einen Kolben (141, 142) bildendes Element umfassen, das sich entlang einer Achse erstreckt, die im Wesentlichen senkrecht zu einer von der Zugstange (11) definierten Ebene ist und zwei Positionen einnehmen kann:
- eine Verriegelungsposition, in der das den Kolben (141, 142) bildende Element einen Feststelldruck gegen mindestens eines der Ausgleichsseile und/oder eines der Reibelemente (131) gewährleistet;
- eine Entriegelungsposition, in der das den Kolben (141, 142) bildende Element keinen Feststelldruck gegen das oder die Ausgleichsseile oder das oder die Reibelemente (131) gewährleistet.

8. Rollvorhang mit Aufwickler nach Anspruch 7, **dadurch gekennzeichnet, dass** das den Kolben (141, 142) bildende Element mit einem Entriegelungsgriff (148) zusammenwirkt, der schwenkbar an seinem Ende (149) montiert ist.

9. Rollvorhang mit Aufwickler nach einem der Ansprüche 1 bis 8, **dadurch gekennzeichnet, dass** die Zugstange (11) eine Struktur aus Metall ist oder aufweist.

10. Rollvorhang mit Aufwickler nach einem der Ansprüche 1 bis 9, **dadurch gekennzeichnet, dass** die Zugstange (11) ein oberes und/oder unteres Dekorteil aus Kunststoff trägt.

11. Kraftfahrzeug, umfassend mindestens einen Rollvorhang mit Aufwickler nach einem der Ansprüche 1 bis 10.

## Claims

1. Roller blind comprising at least one screening cloth drawn along by a draw-bar (11) guided in two guide rails (15, 16), and equipped with balancing means comprising at least one balancing cable (191, 192) which runs along in or on said draw-bar (11), and is guided by at least two pulleys (171, 172) carried by the said draw-bar (11),
**characterised in that** said draw-bar comprises means (147) for blocking said draw-bar (11) which act upon at least one of the said balancing cables (191, 192), and **in that** at least one of the said balancing cables (192) carries, over a portion of its length, at least one first friction element (131) in order to improve the blocking action.

2. Roller blind according to Claim 1, **characterised in that** said draw-bar (11) carries means (27; 51; 75, 76; 81; 91; 113, 114; 121, 122; 148) for unlocking said blocking means.

3. Roller blind according to any of Claims 1 or 2, **characterised in that** it comprises a single actuating cable (27) and a handle (29) which is movable perpendicularly to the axis of said draw-bar (11) and in parallel to the plane defined by said screening cloth in the deployed position, thus actuating a displacement of said actuating cable (27).

4. Roller blind according to any of Claims 1 to 3, **characterised in that** said balancing means comprise two balancing cables (191, 192) which cross within said draw-bar (11).

5. Roller blind according to any of Claims 1 to 4, **characterised in that** it comprises a second friction element (147) which is fixed in relation to the draw-bar (11) and is mounted in such a way that one of said balancing cables (191) is sandwiched between the said first and said second friction element (131, 147) in a blocking position.

6. Roller blind according to any of Claims 1 to 5, **characterised in that** said friction element or elements (131, 147) are parts which are made of a material which has a high coefficient of friction and is over-moulded or fixed onto the cable (192) or onto said draw-bar (11).

7. Roller blind according to any of Claims 1 to 6, **characterised in that** said blocking means comprise a piston-forming element (141, 142) which extends along an axis substantially perpendicular to a plane defined by said draw-bar (11), and is capable of adopting two positions:
- a locking position, in which the piston-forming element (141, 142) maintains a blocking pressure against at least one of said balancing cables and/or one of said friction elements (131); and
- an unlocking position, in which said piston-forming element (141, 142) does not maintain a blocking pressure against said balancing cable or cables and/or said friction element or elements (131).

8. Roller blind according to Claim 7, **characterised in that** said piston-forming element (141, 142) cooperates with an unlocking handle (148) which is rotatably mounted on its end (149).

9. Roller blind according to any of Claims 1 to 8, **characterised in that** said draw-bar (11) is, or comprises, a structure made of metal.

10. Roller blind according to any of Claims 1 to 9, **characterised in that** said draw-bar (11) carries an upper trim and/or a lower cover/cover made of plastic material.

11. Motor vehicle comprising at least one roller blind according to any of Claims 1 to 10.
